# FASCICULE DE BREVET EUROPEEN

(11) **EP 2 027 576 B1**
(45) Date de publication et mention de la délivrance du brevet: **09.12.2009**
(21) Numéro de dépôt: 07730091.1
(22) Date de dépôt: 12.06.2007
(51) Int. Cl.: G10H 1/34

(54) **DISPOSITIF DE SIMULATION TACTILE OU HAPTIQUE ET CLAVIER MUSICAL COMPORTANT AU MOINS UN TEL DISPOSITIF DE SIMULATION**
TAKTILE ODER HAPTISCHE SIMULATIONSEINRICHTUNG UND MUSIK-KEYBOARD MIT MINDESTENS EINER ÄHNLICHEN SIMULATIONSEINRICHTUNG
TACTILE OR HAPTIC SIMULATION DEVICE AND MUSICAL KEYBOARD INCLUDING AT LEAST A SIMILAR SIMULATION DEVICE

(30) Priorité: 14.06.2006 FR 0652130
(43) Date de publication de la demande: 25.02.2009
(73) Titulaire: Commissariat à l'Energie Atomique, 75015 Paris (FR); Centre National de la Recherche Scientifique, 75016 Paris (FR)
(72) Inventeur: LOZADA, José, F-94260 Fresnes (FR); BOUTILLON, Xavier, F-92160 Antony (FR); HAFEZ, Moustapha, F-94110 Arcueil (FR)
(74) Mandataire: Ilgart, Jean-Christophe
(86) Numéro de dépôt international: PCT/EP2007/055769
(87) Numéro de publication internationale: WO 2007/144349

(56) Documents cités:
- EP-A- 1 168 622
- EP-A- 1 426 735
- WO-A-00/28404
- DE-A1-102004 041 690
- US-A- 6 005 178
- US-A1- 2004 084 263

## Description

### DOMAINE TECHNIQUE ET ART ANTÉRIEUR

La présente invention se rapporte à un instrument de musique comportant un dispositif de simulation tactile ou haptique pour opposer à l'avance d'un organe de commande manuel une réaction reflétant le déroulement de la commande, ledit dispositif utilisant un fluide magnéto-rhéologique comme intermédiaire pour générer une réaction par modulation d'un champ magnétique.

Ce dispositif peut notamment être utilisé pour contrôler la force opposée par les touches d'un clavier musical, ou le mouvement des touches, afin d'améliorer le ressenti du musicien.

En effet, le toucher est la principale défaillance des claviers des instruments numériques par rapport aux claviers traditionnels, en particulier ceux des pianos. Dans le but de rendre les claviers d'instruments numériques musicaux chromatiques à douze touches par octave plus attractifs d'un point de vue sensoriel, de nombreux développements technologiques ont été mis au point au courant des années précédentes.

Il existe des systèmes dits passifs permettant d'améliorer la sensation de toucher, notamment connus des documents US2004/0065186Al, US2005/0011330Al. Ces systèmes utilisent un marteau calibré de mouvement compliqué, ceci a pour effet d'augmenter la résistance de la touche au mouvement par augmentation de l'inertie totale du système. Du document US2003/0131720A1, est également connu un système de retour d'effort passif couplé à un système de génération de son qui utilise l'information de plusieurs capteurs afin de rendre celui-ci plus proche du toucher enregistré.

Des systèmes dits actifs mettant en oeuvre un actionnement électromagnétique sont également connus. Ces systèmes actifs utilisent un actionnement électromagnétique linéaire ou rotatif pour contrôler l'effort nécessaire à l'enfoncement de la touche, ce type de système est par exemple décrit dans les documents US 5 783 765 et US 5 977 466.

Étant donnée la complexité du système d'actionnement des touches d'un piano traditionnel, notamment d'un piano à queue, les actionneurs électromagnétiques ne permettent pas de rendre compte de l'ensemble de phénomènes physiques qui se produisent au cours du mouvement de la touche. De plus, le temps de réponse, la gamme d'effort et l'amplitude de mouvement nécessaire rendent l'actionnement électromagnétique insuffisant pour répondre aux besoins de l'application. Enfin, les actionneurs électromagnétiques sont susceptibles par nature de communiquer de l'énergie au système et donc de générer des instabilités de vibration que le schéma de contrôle doit veiller à éliminer.

Il est également connu, du document US 5 409 435, un appareil de musculation comportant un dispositif opposant au mouvement d'un câble un effort ajustable, une réaction identique à la réaction continue provoquée par la levée de poids, habituellement utilisés.

L'appareil comporte un boîtier contenant du fluide magnéto-rhéologique, un disque apte à tourner autour de son axe sous l'action d'un câble déplacé par un utilisateur, et une source de champ magnétique pour modifier la viscosité apparente du fluide magnéto-rhéologique.

L'appareil de musculation comporte également des capteurs de l'effort appliqué sur le câble et/ou de déplacement du câble, ces informations permettant de moduler le champ magnétique.

Ainsi, la vitesse de déplacement en rotation continue du disque autour de son axe est modifiée par modification de la viscosité apparente du fluide magnéto-rhéologique, simulant une charge appliquée au câble.

Ce type de dispositif présente l'inconvénient d'être de réalisation complexe et très encombrant.

Il n'est donc pas adapté à la miniaturisation et à une application dans des systèmes de taille réduite, telles que les touches d'un clavier d'instrument musical numérique.

En outre, l'appareil d'exercice n'est pas suffisamment rapide ni conçu pour être transposé à des systèmes dont la réaction requise doit être rapidement variable, c'est à dire à l'échelle de temps caractéristique du mouvement, et ressentie de manière quasi instantanée pour permettre une bonne commande de celui-ci, par exemple dans le cas où l'on souhaite simuler le ressenti lors de l'enfoncement de la touche d'un piano.

De plus, l'appareil d'exercice de l'art antérieur n'offre pas une sensibilité suffisante pour des systèmes de grande précision, tels que les claviers musicaux chromatiques à douze touches par octave. Les documents WO 00/28404, DE 102004 041690, US 2004/084263, EP-A-1168622 et EP-A-1426,735 divulguent d'autres simulateurs de sensations à fluide magnétorhéologique.

C'est par conséquent un but de la présente invention d'offrir un simulateur de sensation tactile ou haptique de réalisation simple.

C'est également un but de la présente invention d'offrir un simulateur de sensation tactile ou haptique de taille réduite.

C'est en outre un but de la présente invention d'offrir un simulateur de sensation tactile ou haptique d'une grande réactivité et d'une grande sensibilité.

C'est enfin un but de la présente invention d'offrir un simulateur de sensation tactile ou haptique où la boucle principale de contrôle soit intrinsèquement stable au plan vibratoire.

### EXPOSÉ DE L'INVENTION

Les buts précédemment énoncés sont atteints par un instrument de musique selon les revendications jointes, comportant an moins un simulateur de sensation tactile ou haptique en réponse à l'actionnement d'un organe de commande manuelle, utilisant un fluide magnéto-rhéologique soumis à un champ magnétique adaptable, pour contrôler la force nécessaire au déplacement ou le déplacement de l'organe de commande, par exemple d'une touche d'un clavier musical électrique.

Le fluide magnéto-rhéologique comporte des micro-particules en suspension qui réagissent sous l'action d'un champ magnétique et font varier la viscosité apparente du fluide.

Le temps de réponse est alors de l'ordre de la milliseconde. Le dispositif selon l'invention ne présente pas de limitation d'amplitude du mouvement liée au fluide, l'amplitude de mouvement étant alors déterminée par le dispositif. Le dispositif selon l'invention permet, en outre, de faire varier l'effort résistant vers de très grandes valeurs moyennant un champ magnétique adapté.

Selon la présente invention, le simulateur comporte une chambre contenant du fluide magnéto-rhéologique, au moins un élément destiné à être relié mécaniquement à l'organe de commande manuelle et mobile entre des première et deuxième positions prédéterminées, ledit élément étant en interaction avec le fluide magnéto-rhéologique, au moins un capteur d'une grandeur cinématique et/ou dynamique représentative du mouvement de cet élément ou de l'organe de commande, ce capteur étant relié à un organe de contrôle, lui-même relié à un générateur de champ magnétique.

En d'autres termes, le simulateur comporte un élément en interaction avec le fluide magnéto-rhéologique, mobile entre deux positions prédéfinies, ces deux positions définissant les positions d'actionnement extrêmes de l'organe de commande. Au cours du passage d'une position à l'autre, la viscosité apparente du fluide magnéto-rhéologique est modifiée par le champ magnétique, lui-même contrôlé en temps réel en fonction des grandeurs cinématiques et/ou dynamiques représentatives du mouvement de l'organe de commande.

Le simulateur utilisé dans l'instrument de musique selon la présente invention est de conception simple et de taille réduite, ce qui le rend particulièrement adapté aux touches de clavier musical. Sa taille réduite permet sa mise en place au-dessous ou au-dessus d'une touche. En outre, il offre une grande rapidité de réaction et une grande sensibilité de réaction grâce aux propriétés du fluide magnéto-rhéologique. En outre, la chaîne cinématique entre l'organe de commande et l'élément mobile en interaction avec le fluide magnéto-rhéologique est réduite. La réaction simulée est alors très proche de celle ressentie dans le cas d'un piano classique traditionnel.

L'appareil d'exercice décrit par le document US 5 409 435 oppose à l'opérateur, durant son mouvement, un effort sensiblement constant dont la valeur (« Vref ») est ajustable par une commande externe à l'appareil à un niveau donné (« threshold value »). Au contraire, le simulateur selon la présente invention oppose à l'opérateur un effort automatiquement variable dans le temps du mouvement entre deux positions, imitant en temps réel le fonctionnement dynamique d'un dispositif tiers (par exemple un clavier musical traditionnel) dont le modèle dynamique est incorporé explicitement dans l'organe de contrôle.

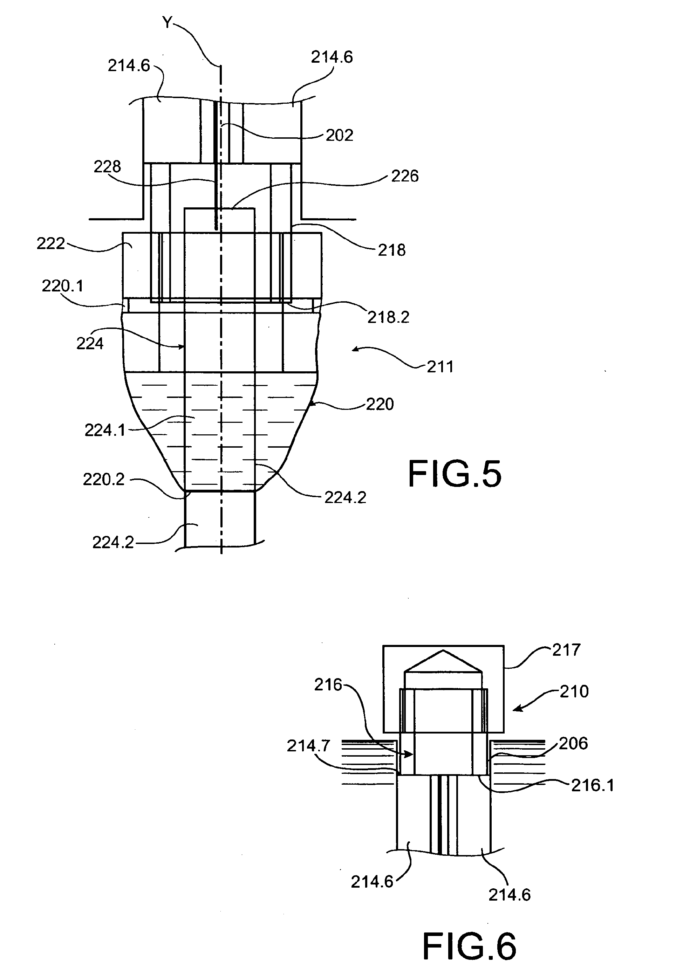

D'une part, le schéma de contrôle du champ magnétique de l'appareil d'exercice décrit par le document US 5 409 435 ne prévoit pas ce calcul en temps réel du champ magnétique et donc de l'effort fourni selon un schéma préétabli et d'autre part, la chaîne cinématique entre l'opérateur et l'organe commandé (représenté sur les figures 6 à 10) comporte trop d'éléments mécaniques intermédiaires flexibles pour permettre le contrôle précis d'un effort rapidement variable opposé à l'opérateur. La présente invention, instituant une liaison quasi-rigide entre l'organe de commande et l'organe commandé (élément mobile en interaction avec le fluide magnéto-rhéologique) et remplaçant le niveau de référence de l'effort (« Vref ») par un modèle dynamique interne, rend possible un contrôle de l'effort avec une constante de temps de l'ordre de la milliseconde, avec une précision de l'ordre du dixième de Newton.

La présente invention a alors principalement pour objet un instrument de musique tel que revendiqué, comportant un dispositif de simulation de sensation tactile ou haptique pour opposer à l'avance d'un organe de commande manuelle une réaction reflétant le déroulement de la commande, ledit dispositif comportant une chambre contenant du fluide magnéto-rhéologique, un élément mobile en interaction mécanique avec le fluide formé par une lame mobile en interaction avec le fluide magnéto-rhéologique et apte à cisailler ledit fluide, et destiné à être relié mécaniquement à l'organe de commande, ledit élément étant mobile entre deux positions prédéterminées, au moins un capteur d'une grandeur cinématique et/ou dynamique représentative du mouvement de cet élément ou de l'organe de commande, un organe de contrôle et des moyens de génération d'un champ magnétique adaptable autour de la chambre, ledit capteur étant relié à l'organe de contrôle, lui-même relié aux moyens de génération d'un champ magnétique, l'ensemble étant tel que la viscosité apparente du fluide magnéto-rhéologique varie au cours du déplacement de l'organe de commande manuelle.

L'organe de contrôle est apte à recevoir en temps réel des mesures provenant du au moins un capteur, et à calculer le courant à appliquer aux moyens de génération du champ magnétique en fonction du temps, à partir d'une part d'un modèle dynamique du dispositif à simuler, et d'autre part des mesures en temps réel provenant du au moins un capteur.

Le capteur peut être choisi parmi un capteur d'effort appliqué sur ou par l'organe de commande manuelle, un capteur de mouvement de l'organe de commande manuelle ou de l'élément mobile.

Selon l'invention, l'élément mobile est une lame apte à cisailler le fluide magnéto-rhéologique.

La lame peut avantageusement être flexible, le déplacement de l'élément mobile en est alors facilité et le dispositif est rendu plus robuste.

Le dispositif de simulation peut alors comporter un support de lame de résistance au flambage supérieure à celle de la lame, apte à relier la lame à l'organe de commande manuelle, ce qui permet d'éviter les risques de flambage de la lame.

La lame peut être en matériau amagnétique, par exemple en laiton, en cuivre ou en mica. Alternativement, la lame peut être en matériau magnétique tel que le fer ou l'acier auquel cas sont avantageusement prévus des moyens de guidage en matériau amagnétique.

Selon l'invention, la chambre comporte une poche souple contenant du fluide magnéto-rhéologique, ladite poche étant prise en sandwich entre un pôle des moyens de génération de champ magnétique et la lame, ladite lame étant en contact sensiblement plan avec une enveloppe extérieure de la poche.

Dans une variante de réalisation, la chambre comporte plusieurs poches souples contenant du fluide magnéto-rhéologique, lesdites poches étant prises en sandwich entre un pôle des moyens de génération de champ magnétique et la lame, ladite lame étant en contact sensiblement plan avec des enveloppes extérieures des poches.

Selon une variante de l'invention, la lame pénètre dans le fluide magnéto-rhéologique.

Dans cette variante de réalisation, le support de lame peut comporter une tige en deux parties, une première partie disposée dans la chambre et une deuxième partie disposée à l'extérieur de la chambre, une membrane flexible, fermant de manière étanche une extrémité de la chambre, étant pincée entre les deux parties de la tige.

Le dispositif de simulation peut comporter des moyens de rappel en position de repos de l'organe de commande manuelle.

Par ailleurs, les moyens de génération d'un champ magnétique variable comportent au moins une bobine électrique.

Selon la variante de réalisation de l'invention, la chambre peut avantageusement être délimitée latéralement directement par les moyens de génération de champ magnétique et des plaques ou des coques, le fluide magnéto-rhéologique venant en contact directement avec les moyens de génération de champ magnétique, et dans lequel la chambre est délimitée longitudinalement à une première extrémité par une membrane flexible, et/ou à une seconde extrémité par un bouchon ou par une membrane flexible.

La chambre peut également être délimitée latéralement directement et par un élément d'un seul tenant comportant des lumières latérales obturées par les pôles des moyens de génération de champ magnétique, le fluide magnéto-rhéologique venant en contact directement avec les moyens de génération de champ magnétique, et dans lequel la chambre est délimitée longitudinalement à une première extrémité par une membrane flexible, et/ou à une seconde extrémité par un bouchon ou par une membrane flexible.

L'instrument de musique selon la présente invention telle que revendiquée a également pour objet un système à commande manuelle, comportant au moins un organe de commande manuelle, au moins un dispositif de simulation selon la présente invention, associé audit organe de commande.

La présente invention telle que revendiquée a pour objet un instrument de musique à clavier musical chromatique muni de douze touches par octave et un dispositif de simulation selon la présente invention associé à chaque touche.

Dans les descriptions qui vont suivre, le simulateur de l'instrument de musique selon la présente invention est associé à une touche de clavier musical afin d'exercer sur le doigt du musicien une action similaire, sur le plan sensoriel, à celle qu'exercerait un clavier traditionnel, par exemple de piano, en simulant le comportement dynamique d'une touche de clavier traditionnel, par exemple de piano, lorsque le musicien enfonce les touches. Cependant, la présente invention s'applique à tout instrument de musique à clavier dans lequel on souhaite reproduire artificiellement une sensation en retour d'un effort exercé sur un organe de commande manuelle.

Le terme « organe de commande manuelle » ne se limite pas à un élément actionné à l'aide de la main ou du doigt, celui-ci désigne tout élément actionnable avec une autre partie du corps, comme le pied, l'organe de commande manuelle peut alors être une pédale.

### BRÈVE DESCRIPTION DES DESSINS

La présente invention sera mieux comprise à l'aide de la description qui va suivre et des dessins annexés, dans laquelle la gauche et la droite, le haut et le bas correspondent respectivement aux parties gauches et droites, et aux parties inférieure et supérieure des dessins, sur desquels :
- la figure 1 est une vue schématique de côté, avec une coupe partielle, d'un mode de réalisation d'un dispositif de simulation pour instrument de musique selon la présente invention,
- la figure 2 est une vue de détail du dispositif de la figure 1,
- la figure 3 est une vue en perspective d'une variante de réalisation de l'invention,
- la figure 4 est une vue de face du dispositif de la figure 3,
- la figure 5 est une vue de détail d'une extrémité du dispositif de la figure 3,
- la figure 6 est une vue de détail d'une autre extrémité du dispositif de la figure 3,
- la figure 7 est une vue de dessus du dispositif de la figure 3,
- les figure 8A et 8B sont des vues en perspective d'un deuxième de exemple de réalisation de la chambre contenant le fluide magnéto-rhéologique,
- les figures 9A à 9C représentent un exemple de système de guidage par le haut (9B) et par le bas (9C) de la lame (9A) du deuxième mode de réalisation,
- la figure 10 représente un système bielle-manivelle mis en oeuvre dans le deuxième exemple de réalisation de la chambre contenant le fluide magnéto-rhéologique,
- la figure 11 représente un schéma bloc de l'ensemble des éléments du simulateur et de son environnement.

### EXPOSÉ DÉTAILLÉ DE MODES DE RéALISATION PARTICULIERS

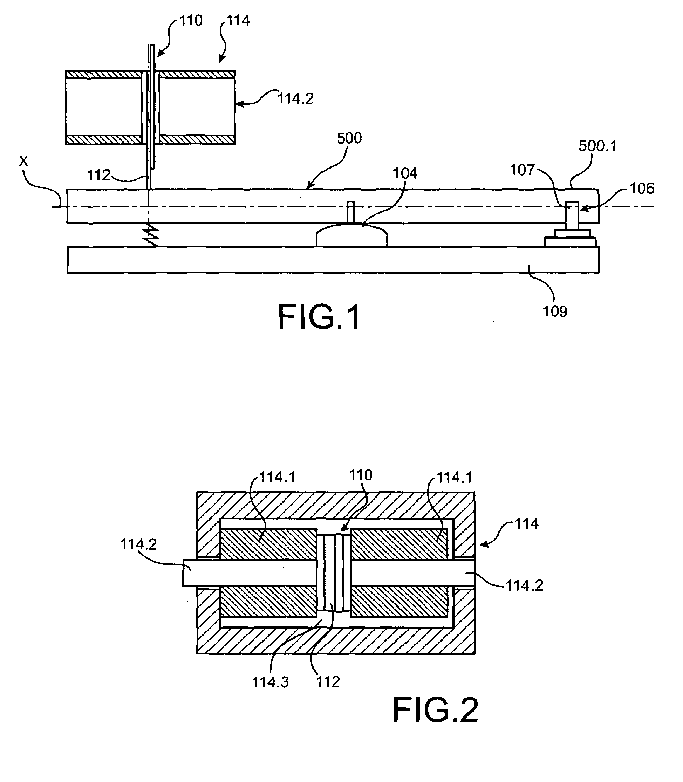

Sur les figures 1 et 2, on peut voir un premier mode de réalisation d'un simulateur pour instrument de musique selon la présente invention comportant une poche 110 contenant un fluide magnéto-rhéologique, et une lame mobile 112 en interaction de cisaillement avec le fluide magnéto-rhéologique.

On entend par « lame » dans la présente demande, un élément ayant une longueur et une largeur très grandes par rapport à son épaisseur offrant ainsi une grande surface apte à cisailler le fluide magnéto-rhéologique tout en offrant peut de résistance selon sa section transversale au mouvement du fait d'une faible épaisseur.

Le simulateur pour instrument de musique selon l'invention comporte également des moyens 114 de génération de champ magnétique disposés autour d'une zone de la poche 110 contenant le fluide magnéto-rhéologique.

Ces moyens 114 comportent, par exemple un circuit magnétique 114.1, sur lequel sont positionnées une ou plusieurs bobines 114.2, disposées de part et d'autre de la zone où l'élément mobile 112 est en interaction de cisaillement avec le fluide magnéto-rhéologique.

Ainsi, lorsque la ou les bobines 114.2 sont alimentées, celles-ci génèrent un champ magnétique dans la zone qu'elles entourent, les particules ferromagnétiques contenues dans cette zone tendent à s'aligner dans la direction du champ, provoquant une variation de la viscosité apparente du fluide dans le volume activé ; le mouvement de la lame mobile en cisaillement relativement au fluide magnéto-rhéologique est alors plus ou moins freiné.

La lame se déplace selon une direction axiale contenue dans le plan moyen de celle-ci.

Des moyens d'alimentation électrique (non représentés) de l'électroaimant et des bobines sont également prévus.

La combinaison d'un dispositif utilisant les fluides magnéto-rhéologique et d'un actionnement électromagnétique offre l'avantage de compenser la viscosité initiale du fluide et ainsi d'augmenter la bande passante en effort résistant dans la zone de faible résistance. Cette combinaison permet une amélioration du contrôle en temps réel de l'intensité d'alimentation et donc de l'effort résistant fourni par le système.

Ainsi, il est possible de reproduire les effets de différents phénomènes mécaniques se produisant lors de la course d'une touche de clavier traditionnel, de piano par exemple.

Un ou des capteurs d'une grandeur cinématique ou dynamique représentatives du mouvement de l'élément mobile ou de l'organe de commande manuelle sont également prévus. Un seul capteur peut être suffisant, ainsi que la détermination a priori d'un modèle ; un deuxième capteur peut être utile pour améliorer la précision de la simulation. Le ou les capteurs peuvent être disposés directement sur la touche.

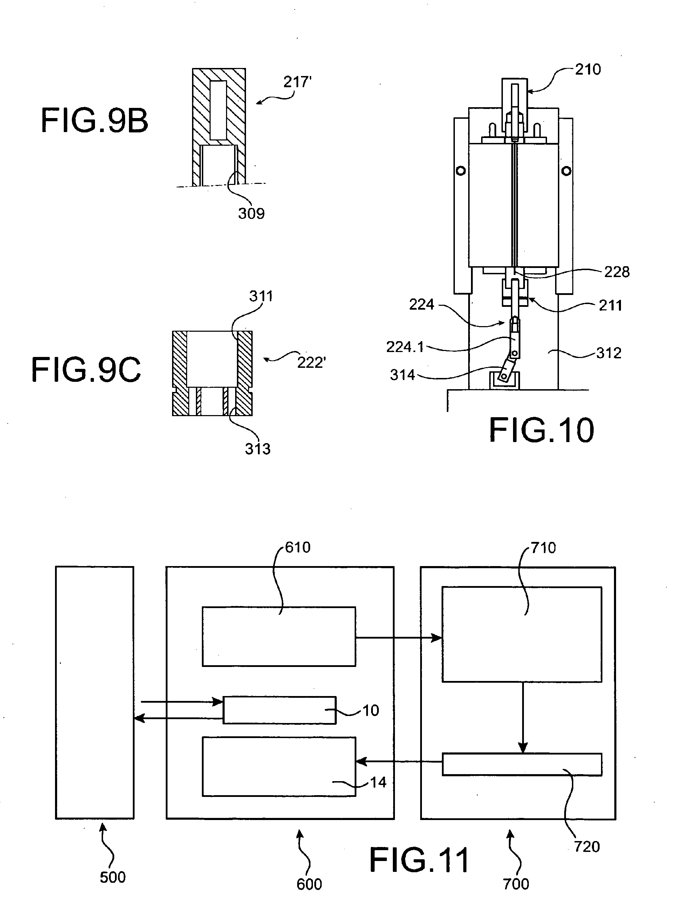

À partir des mesures temporelles effectuées par le ou les capteurs et un ou des convertisseurs analogique-numérique, un organe de contrôle 700 (figure 11) détermine en temps réel l'intensité du courant électrique permettant aux moyens 14 de générer un champ magnétique adapté à l'effort à appliquer en réaction sur la touche. Le calcul du champ magnétique se fait à partir des données des capteurs et d'un modèle mathématique du comportement dynamique à simuler préenregistré dans la mémoire de l'organe de contrôle.

Sur la figure 11, on peut voir un schéma d'un dispositif de simulation représentant l'interaction entre l'organe de commande manuelle désigné par la référence 500, le simulateur désigné par la référence 600 et l'organe de contrôle 700.

Le simulateur 600 comporte comme indiqué ci-dessus un élément mobile 112 apte à cisailler le fluide magnéto-rhéologique, un capteur de force et/ou de mouvement 610 et des moyens de génération de champ magnétique 14.

L'organe de contrôle 700 comporte un calculateur en temps réel 710, typiquement, un microprocesseur de type DSP (digital signal processor en terminologie anglaise) ou autre muni d'un ou de plusieurs convertisseurs analogique-numériques et d'une mémoire qui détermine le courant électrique à appliquer, par l'intermédiaire d'un convertisseur numérique-analogique et éventuellement de l'amplificateur de puissance 720, aux moyens de génération du champ magnétique, sur la base de modèles dynamiques du comportement mécanique, mémorisés dans le calculateur 710.

L'organe de contrôle peut également comporter un amplificateur de puissance 720.

Nous allons maintenant expliquer de marnière, générale le fonctionnement du simulateur pour instrument de musique selon la présente invention sur la base du schéma de la figure 11.

Au fur et à mesure de l'actionnement de l'organe de commande manuelle 500, l'élément mobile 112 du simulateur 600 est déplacé, le capteur 610 mesure alors la variation au cours du temps d'au moins une grandeur physique caractéristique de ce déplacement, le flux temporel de mesure est transmis au calculateur 710 de l'organe de contrôle 700. Celui-ci détermine en temps réel la succession temporelle des valeurs de l'intensité du courant qu'il envoie aux moyens de génération du champ magnétique du simulateur 600 par l'intermédiaire éventuel de l'amplificateur de puissance 720. La viscosité apparente du fluide magnéto-rhéologique varie alors au cours de l'actionnement et une réaction est alors transmise à l'organe de commande via l'élément mobile 112.

Nous allons maintenant expliquer le fonctionnement spécifique du dispositif représenté sur les figures 1 à 2.

Lorsque le musicien appuie sur une touche qui forme l'organe de commande, il impose un mouvement à la lame 112, laquelle se déplace en cisaillant le fluide magnéto-rhéologique.

Le mouvement de la touche ainsi que l'effort appliqué à la touche sont mesurés par le capteur au cours de l'action du musicien (typiquement, à une fréquence d'échantillonnage de 2kHz) et transférés à l'organe de contrôle qui détermine, (typiquement une fréquence d'échantillonnage de 2 kHz) (les deux fréquences d'échantillonnage ne sont pas nécessairement identiques) la valeur du champ magnétique à appliquer et génère le courant correspondant aux moyens 14 de génération de champ magnétique.

Le fluide sous l'action du champ magnétique voit sa viscosité apparente varier, ce qui rend le mouvement de la lame 112 apte à cisailler le fluide magnéto-rhéologique plus ou moins difficile. L'effort nécessaire au mouvement est ainsi contrôlé conformément au modèle à simuler et la réaction souhaitée est alors ressentie par le musicien.

Lorsque le musicien cesse d'exercer un effort sur la touche, ce qui est détecté par les capteurs mentionnés ci-dessus, l'électroaimant exerce. De manière avantageuse, une induction magnétique nulle est appliquée au fluide magnéto-rhéologique par l'organe de contrôle dans cette phase de retour, afin d'avoir un écoulement rapide du fluide et un retour rapide en position de repos. En effet, en l'absence de courant électrique dans les bobines, une induction magnétique rémanente existe dans le circuit magnétique qu'il convient de minimiser par l'application d'un courant électrique correspondant au champ coercitif.

La lame mobile 112 est alors attirée vers le bas sous la traction du ressort de rappel, ce qui provoque le retour de la touche en position repos.

Ce simulateur présente une grande réactivité du fait du temps de réaction faible du fluide magnéto-rhéologique, et de la chaîne cinématique réduite entre la touche et la lame 112. Par ailleurs, la réaction simulée peut être très précise et très proche d'une réaction ressentie sur un piano traditionnel grâce au calcul en temps réel de la résistance mécanique à opposer au musicien selon le modèle de piano traditionnel préétabli.

Ce simulateur présente l'avantage d'être très compact, ce qui facilite son intégration sous la touche d'un piano. Ce simulateur devient alors très discret.

Nous allons maintenant décrire en détail le simulateur des figures 1 et 2, on peut voir un premier mode de réalisation d'un simulateur de sensation tactile ou haptique selon la présente invention, appliqué à un instrument de musique à clavier.

On peut voir un organe de commande 500 formé par une touche de clavier musical traditionnel d'axe longitudinal X, montée pivotante autour d'un pivot 104 sensiblement dans sa partie médiane. Elle pourrait être remplacée par un levier pivotant autour d'un point fixe.

Un moyen de guidage 106 est prévu à une extrémité 500.1 de la touche 500 recevant l'effort du musicien. Celui-ci est sensiblement identique à celui d'un piano de l'art antérieur.

Le simulateur selon la présente invention comporte une poche 110 flexible remplie de fluide magnéto-rhéologique, des moyens 114 de génération d'un champ magnétique pour faire varier la viscosité apparente du fluide magnéto-rhéologique.

Dans l'exemple représenté, les moyens 114 comportent deux bobines 114.1 coaxiales distantes l'une de l'autre, un noyau magnétique 114.2 délimitant entre les bobines un entrefer 114.3 où sont logés la poche 110 et l'élément mobile 112, le tout formant un circuit magnétique canalisant le champ magnétique.

La poche 110 est de faible épaisseur relativement à sa longueur et à sa largeur. Celle-ci est prise en sandwich dans un entrefer du circuit magnétique, entre un élément 112 mobile solidaire du mouvement de la touche 500 et l'un des pôles 114.2.1 du noyau.

L'élément 112 est de forme allongé, d'axe Y sensiblement orthogonal à l'axe X de la touche 500. De manière avantageuse, l'élément 112 est formé par une lame dont une plus grande surface est en contact sensiblement plan avec une plus grande surface de la poche 110.

De manière très avantageuse, la lame 112 est flexible, permettant d'absorber les déformations latérales lorsqu'un effort est appliqué sur la touche 500.

La lame 112 peut être réalisée en tout matériau amagnétique, par exemple en laiton, en cuivre ou en mica.

Ainsi, un déplacement de la lame selon son axe Y provoque un cisaillement du fluide contenu dans la poche 110.

Par application d'un champ magnétique variable, la viscosité apparente du fluide est contrôlée ainsi que l'effort nécessaire au cisaillement et la résistance au déplacement de la lame 112. Par conséquent, la réaction ressentie par le musicien lors du déplacement de la touche 500 a des caractéristiques conformes au modèle prédéterminé.

Des capteurs (non représentés) d'effort et de mouvement sont également prévus pour déterminer le déplacement, la vitesse et l'accélération de la touche ainsi que l'effort appliqué sur la touche.

Ces capteurs peuvent être disposés directement sur la touche ou entre la touche et la lame 112.

Ces capteurs sont reliés à une unité de contrôle 700 (figure 11) qui génère en temps réel un courant électrique variable permettant aux moyens 114 de produire un champ magnétique adapté. Le calcul du champ magnétique se fait à partir des mesures temporelles des capteurs et d'un modèle mathématique du comportement dynamique à simuler préenregistré dans la mémoire de l'organe de contrôle.

Des moyens de rappel 116 sont prévus entre la touche et la table 109 pour ramener la touche en position de repos. Ceux-ci sont, par exemple disposés sensiblement au droit de lame 112 à l'opposé de la face de la touche, sur laquelle la lame 112 est fixée.

Dans l'exemple représenté, les moyens de rappel 116 sont formés par un ressort. Mais on peut prévoir de remplacer le ressort par un élément actionneur électromagnétique.

Dans l'exemple représenté, la touche, le pivot, les moyens de guidage sont ceux d'un piano traditionnel, mais on peut les remplacer par des moyens remplissant les mêmes fonctions.

Par exemple, le pivot pourrait être formé par un axe passant dans un alésage pratiqué dans la touche, perpendiculairement à l'axe X de la touche 500.

A titre illustratif, le circuit magnétique peut avoir les dimensions suivantes :
- longueur : 60 mm,
- largeur : 30 mm,
- hauteur : 50 mm.

La lame peut avoir une longueur de 70 mm et les bobines peuvent comporter 1000 spires de fil de diamètre 0.25 mm.

Nous allons maintenant expliquer le fonctionnement du dispositif selon la présente invention.

Le fonctionnement décrit précédemment en relation avec la figure 11 s'applique.

Lorsque le musicien appuie sur la touche 500, l'effort appliqué à la touche et/ou le mouvement de la touche sont mesurés et transmis à l'unité de contrôle, typiquement à une fréquence d'échantillonnage de 2 kHz.

En fonction de ces mesures et du modèle dynamique du dispositif à simuler, l'unité de contrôle détermine en temps réel le champ magnétique à appliquer et génère le courant approprié dans les moyens 114 de génération de champ magnétique.

Le fluide voit alors varier sa viscosité apparente, le cisaillement du fluide provoqué par le déplacement de la lame 112 est alors rendu plus ou moins difficile. Une résistance variable, simulant la sensation d'un clavier traditionnel, par exemple de piano, est ainsi ressentie par le musicien tout au long du mouvement d'enfoncement de la touche.

Lorsque le musicien relâche son effort sur la touche, celle-ci est ramenée en position de repos par les moyens de rappel 116. Une induction magnétique nulle est alors appliquée au fluide magnéto-rhéologique pour en minimiser la viscosité apparente et faciliter le coulissement en retour de la lame dans sa position repos.

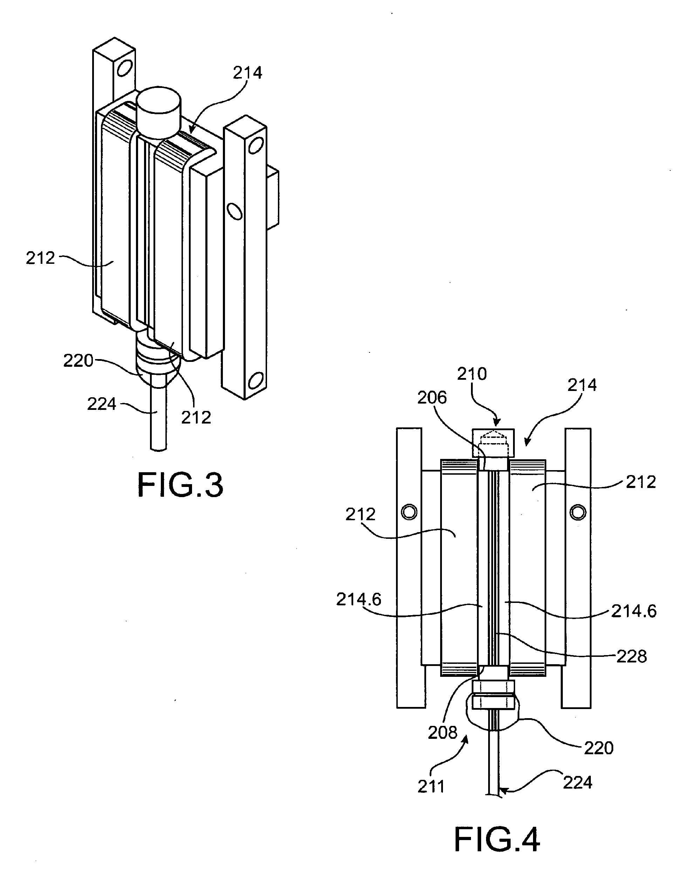

Sur les figures 3 à 8, on peut voir une variante de réalisation d'un dispositif de simulation pour instrument de musique selon la présente invention, dans lequel le fluide magnéto-rhéologique est également soumis à un effort de cisaillement.

Le dispositif selon la présente invention comporte des moyens 214 pour générer un champ magnétique dans un espace déterminé 201 et une chambre 202 remplie de fluide magnéto-rhéologique, disposée dans l'espace 201.

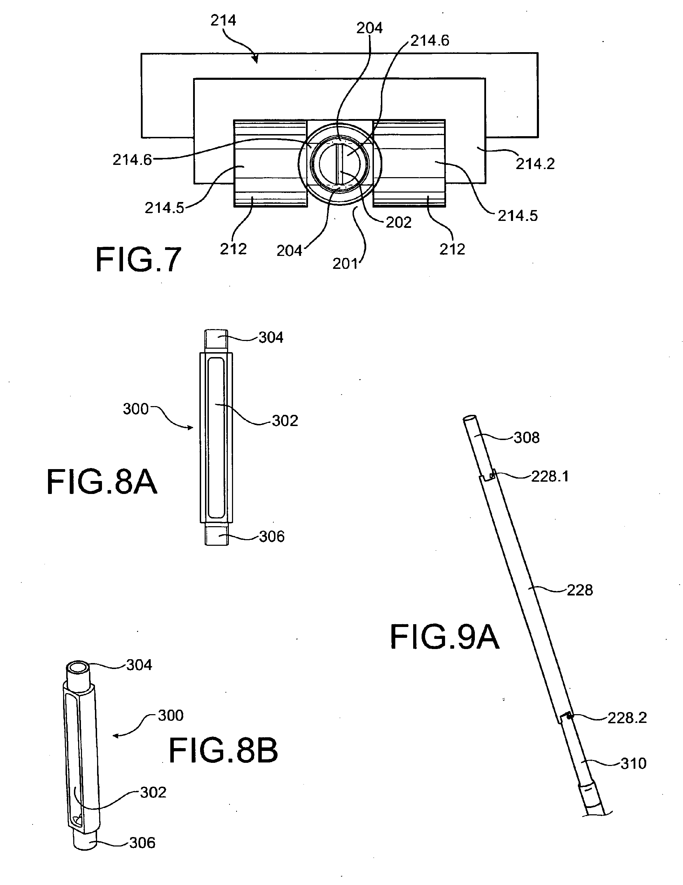

Dans l'exemple représenté, les moyens 214 comportent un circuit magnétique 214.2 à section transversale rectangulaire (figure 7), dont un plus grand coté est ouvert, délimitant l'espace 201. Le plus grand côté ouvert comporte alors deux branches 214.5 coaxiales et l'espace 201. Les moyens 214 comportent deux bobines 212 montées autour des branches 214.5, de part et d'autre de l'espace 201, des extrémités 214.6 des branches 214.5 faisant saillie des bobines 212, ces extrémités formant des pôles magnétiques.

Dans l'exemple représenté, la chambre 202 est délimitée latéralement, sur deux côtés opposés directement par les pôles magnétiques 214.6, et sur deux autres côtés opposés par deux parois rapportées, par exemples des plaques 204, reliant les deux pôles magnétiques 214.6, de manière à fermer la périphérie de la chambre.

Les plaques 204 sont par exemple collées sur les pôles magnétiques.

Dans cet exemple de réalisation, le fluide magnéto-rhéologique est directement en contact avec les pôles magnétiques 214.6. Cette configuration présente l'avantage de réduire la réluctance du circuit magnétique. Le circuit électrique des bobines peut alors comporter moins de spires, ce qui diminue sa constante de temps et le rend moins encombrant.

La cavité 202 est fermée à des première 206 et deuxième 208 extrémités longitudinales, par des moyens d'obturation 210, 211.

On pourrait également prévoir de ne pas fermer l'extrémité 206, une ouverture étant alors prévue au niveau de cette extrémité 206

Le moyen d'obturation 210 représenté en détail sur la figure 6, se trouvant, dans l'exemple représenté, en partie supérieure du dispositif (auquel cas, il n'est pas strictement nécessaire au fonctionnement du simulateur), comporte un élément tubulaire 216 fixé de manière étanche par une de ses extrémités axiales 216.1 sur une extrémité supérieure 214.7 des pôles magnétiques 214.6. L'élément tubulaire 216 a un diamètre intérieur supérieur à une plus grande dimension transversale de la cavité 202 et un diamètre extérieur inférieur à la largeur de l'espace 201.

L'élément tubulaire 216 est, par exemple collé sur les pôles magnétiques 214.6.

Un bouchon 217 obture de manière étanche une autre extrémité axiale 216.2 de l'élément tubulaire 216, par exemple par vissage sur celui-ci.

Le deuxième moyen d'obturation 211 représenté en détail sur la figure 5, obture une extrémité inférieure de la cavité 202, par laquelle va pénétrer un élément solidaire d'un organe de commande, dans notre exemple une touche de clavier, apte à cisailler le fluide magnéto-rhéologique. Il s'agit dans ce mode de réalisation d'une lame 228.

De manière avantageuse, la lame 228 est de dimension longitudinale relativement réduite pour limiter les risques de flambement et est reliée à la touche par un support 224 de lame ne présentant pas de risque de flambement à l'échelle des efforts mis en jeu.

La lame 228 est avantageusement flexible afin de convertir le mouvement de rotation de la touche en mouvement de translation de l'élément mobile dans l'entrefer entre les pôles magnétiques.

La lame 228 peut être réalisée en tout matériau amagnétique, par exemple en laiton, en cuivre ou en mica.

Ce deuxième moyen d'obturation 211 comporte un élément tubulaire 218 de dimension similaire à celle de l'élément tubulaire 216, fixé par une face 218.1 sur les pôles magnétiques 214.6.

Une deuxième face 218.2 de l'élément tubulaire 218 est obturée par une membrane flexible partiellement déroulante 220.

La membrane flexible 220 peut également être de forme sensiblement tubulaire ou tronconique.

La membrane 220 étanche au fluide magnéto-rhéologique, est solidaire, par une première extrémité 220.1, d'une bague 222 fixée de manière étanche sur l'élément tubulaire 216 du côté de la face 218.2, par exemple par vissage et, par une deuxième extrémité 220.2, du support de lame 224.

Dans l'exemple représenté, le support de lame 224 comporte une tige en deux parties qui sera décrite par la suite.

La membrane 220 peut être collée sur la bague 222 ou réalisée d'un seul tenant avec la bague 222, par exemple par co-moulage.

La tige comporte une première partie 224.1 à l'intérieur de la chambre 202 et une deuxième partie 224.2 à l'extérieur de la chambre 202, la deuxième extrémité 220.2 de la membrane 220 étant pincée, de manière étanche, entre les deux parties 224.1, 224.2 de la tige. Les deux parties 224.1, 224.2 de la tige peuvent être fixées l'une à l'autre par vissage, collage ou tout autre moyen de solidarisation.

Dans l'exemple représenté, la lame pénètre dans la cavité par le bas de celle-ci, mais on peut prévoir que la lame 228 pénètre dans la cavité par le haut, permettant une intégration complète sous la touche du piano.

La tige 224 est mobile en translation selon l'axe Y de la cavité 202 et peut se déplacer sans altérer l'étanchéité de la cavité 202 grâce à la membrane 220.

Une première extrémité longitudinale (non représentée) de la tige 224 est reliée à un organe de commande, dans l'exemple considéré la touche de clavier, et une deuxième extrémité longitudinale 226 de la tige porte la lame 228 apte à se déplacer selon l'axe X dans l'espace 201 entre les deux pôles magnétiques 214.6.

L'utilisation d'une tige composite comme support de lame permet de s'affranchir des risques de flambage et facilite la fixation étanche de la membrane déroulante 220.

La chambre 202 est alors formée par l'espace entre les pôles magnétiques 214.6 et la membrane 220, le fluide magnéto-rhéologique remplit l'espace entre les pôles magnétiques 214.6 et la membrane 220.

Des capteurs (non représentés) d'effort et/ou de mouvement sont également prévus pour mesurer l'effort appliqué sur la touche et/ou son mouvement.

Ces capteurs peuvent être disposés directement sur la touche, la lame 228 ou la tige 224.

Ces capteurs sont reliés à une unité de contrôle (figure 11) qui génère en temps réel un courant électrique variable permettant aux moyens 214 de produire un champ magnétique adapté. Le calcul du champ magnétique se fait à partir des données des capteurs et d'un modèle mathématique du comportement à simuler préenregistré dans la mémoire de l'organe de contrôle 700.

Lorsque l'élément mobile est amagnétique, son épaisseur est de préférence la plus faible possible afin de minimiser la réluctance du circuit magnétique, ce qui permet de diminuer la puissance électrique requise.

D'autres moyens d'étanchéité de la chambre 202 peuvent être prévus tels que joint torique, joint à lèvre, presse-étoupe, etc. Le système à membrane partiellement déroulante présente l'avantage d'offrir une résistance mécanique à l'avancement de l'organe de commande manuelle très faible, sans nécessiter de dispositif actif auxiliaire.

Des moyens de rappel de la tige en position de repos peuvent être prévus tels que ressort, masse ajoutée (suivant la disposition du simulateur), électroaimant, etc.

Dans un exemple de réalisation, le circuit magnétique peut avoir une longueur comprise entre 50 mm et 70 mm, une largeur comprise entre 18 mm et 27 mm et une hauteur de 70 mm. L'épaisseur de l'entrefer peut être de 1 mm. La lame a, par exemple, une épaisseur de 0,2 mm, une largeur de 6,8mm et une hauteur de 85 mm. Quant à la chambre, elle a une largeur de 7 mm et une hauteur de 105 mm.

La hauteur totale du dispositif est alors de 140 mm, ce qui le rend adapté à la mis en place, notamment sous la touche d'un clavier d'un piano électrique.

Le fonctionnement du dispositif de simulation va être maintenant décrit.

Le fonctionnement décrit précédemment en relation avec la figure 11 s'applique.

Lorsque le musicien appuie sur la touche, l'effort appliqué à la touche et/ou le mouvement de la touche sont mesurés et transmis à l'unité de contrôle, typiquement à une fréquence d'échantillonnage de 2 kHz.

En fonction de ces mesures et du modèle dynamique du dispositif à simuler, l'organe de contrôle détermine en temps réel le champ magnétique à appliquer et génère le courant approprié dans les moyens 214 de génération de champ magnétique.

Le fluide voit alors varier sa viscosité apparente, le cisaillement du fluide provoqué par le déplacement de la lame 112 est alors rendu plus ou moins difficile. Une résistance variable, simulant la sensation d'un clavier traditionnel, par exemple de piano, est ainsi ressentie par le musicien tout au long du mouvement d'enfoncement de la touche.

Lorsque le musicien relâche son effort sur la touche, celle-ci est ramenée en position de repos par des moyens de rappel (non représentés). Une induction magnétique nulle est alors appliquée au fluide magnéto-rhéologique pour faciliter le retour de la lame à sa position de repos.

Selon la présente invention, le mouvement de la touche et/ou l'effort qui lui sont appliqués sont mesurés pendant toute la durée d'application de l'effort, afin de moduler le champ magnétique au cours du déplacement de la touche et reproduire au plus près la sensation de toucher d'un clavier traditionnel.

Selon une variante très avantageuse du deuxième mode de réalisation de l'invention représentée en figure 8, la chambre 202 est délimitée par un élément 300 d'un seul tenant, réalisé par exemple par usinage ou par moulage.

Cet élément 300 est de forme allongée, et comporte deux ouvertures latérales 302, se faisant face dans l'exemple présenté, qui sont destinées à être obturées par les pôles magnétiques 214.6.

L'élément 300 comporte également une première 304 et une deuxième 306 extrémité longitudinale ouverte débouchant entre les ouvertures 302 de l'élément 300.

Comme pour l'exemple de réalisation représenté en figures 3 et 4, le bouchon 217 est vissé sur la première extrémité longitudinale 304 de l'élément 300 et la bague 222 formant support de membrane est vissée sur la deuxième extrémité longitudinale 306 de l'élément 300.

Cet élément permet avantageusement d'assurer une meilleure étanchéité du fait de la réduction du nombre de pièces mises en oeuvre.

Comme décrit précédemment, on pourrait également prévoir de ne pas fermer l'extrémité 210.

Dans une variante de réalisation, la lame 228 pénétrant dans le fluide magnéto-rhéologique est réalisée en matériau magnétique. L'avantage est que le mode d'interaction avec le fluide magnéto-rhéologique est plus efficace, permettant de maximiser l'effort appliqué pour un circuit électrique donné. Dans ce cas, il est préférable que la lame soit guidée latéralement au cours de son déplacement afin d'éviter un collage contre l'un des pôles magnétiques.

La figure 9A montre un exemple de tel guidage. La lame 228 comporte à chacune de ses extrémités longitudinales 228.1, 228.2 une extension 308, 310 à section circulaire destinée à pénétrer dans des alésages 309, 311 pratiqués aux extrémités de la chambre 202, dont l'un est obturé par le bouchon 217' et l'autre est pratiqué dans la bague 222', dont on peut voir des représentations sur les figures 9B et 9C.

Sur la figure 9B, on peut voir le bouchon 217' vu en coupe comportant l'alésage 309 ajusté au diamètre de l'extension 308.

Sur la figure 9C, on, peut voir la bague 222' vue en coupe, comportant l'alésage 310 ajusté au diamètre de l'extension 310, entouré de canaux 313 pour permettre l'écoulement du fluide magnéto-rhéologique.

Ainsi les extensions 308, 310 coulissent dans les extrémités de la chambre 202, guidant longitudinalement le déplacement de la lame dans la chambre 202, évitant ainsi un risque de collage de la lame sur un des pôles.

Un dispositif dans lequel la lame comporte de tels moyens de guidage, mais dont la lame n'est pas réalisée en matériau magnétique ne sort pas du cadre de la présente invention.

On peut également prévoir avantageusement de remplacer la lame par un ensemble de lames montées en peigne et mobiles par rapport à un autre peigne de lames monté fixe sur l'un des pôles, permettant d'augmenter la surface d'interaction avec le fluide magnéto-rhéologique.

Sur la figure 10, est représenté un dispositif selon une variante d'un deuxième mode de réalisation permettant une transformation d'un mouvement de rotation de l'organe de commande manuelle, par exemple dans l'exemple d'application du clavier musical, en un mouvement de translation de la lame.

Selon la variante de réalisation représentée sur la figure 10, le dispositif comporte un système bielle-manivelle 312 reliant l'organe de commande manuelle à la lame.

Le système bielle-manivelle 312 est de type connu et comporte deux bras liés en rotation par une de leurs extrémités, l'un 314 est lié en rotation avec l'organe de commande par une autre extrémité, et l'autre bras est formé par la deuxième partie 224.1 de la tige 224.

La transformation du mouvement de rotation en mouvement de translation peut également être réalisée au moyen d'un autre système connu comme par exemple un système pignon-crémaillère.

La liaison entre l'organe de commande manuelle et l'élément mobile en interaction avec le fluide magnéto-rhéologique est ainsi améliorée.

La présente invention s'applique notamment aux pianos numériques, mais elle s'applique également à tous les instruments de musique à clavier comportant des systèmes à commande manuelle nécessitant une contre-réaction afin de permettre un dosage de l'effort.

Le simulateur utilisé dans l'instrument de musique selon présente invention peut s'appliquer à tout dispositif à retour d'effort variable, interface homme-machine, autre que les touches de clavier musical : pédale automobile ou autre, manette de jeu, dispositif haptique pour la réalité virtuelle ou la télé-opération (chirurgicale ou en environnement hostile, par exemple) ; cependant des dispositifs magnétorhéologiques similaires sont déjà connus pour certaines de ces applications.

## Revendications

1. Instrument de musique chromatique à clavier muni de douze touches par octave, de type piano comportant au moins un dispositif de simulation de sensation tactile ou haptique associé à au moins une (500) desdites touches, ledit dispositif étant destiné à opposer à l'avance de ladite touche (500) une réaction reflétant le déroulement de la commande, ledit dispositif comportant une chambre (110, 202) contenant du fluide magnéto-rhéologique, au moins un élément mobile (112, 228) apte à cisailler le fluide magnéto-rhéologique et destiné à être relié mécaniquement à ladite touche (500), ledit élément comportant au moins une lame apte à cisailler le fluide magnéto-rhéologique, ledit élément (112, 228) étant mobile entre deux positions prédéterminées, au moins un capteur d'une grandeur cinématique et/ou dynamique représentative du mouvement de cet élément ou de l'organe de commande, un organe de contrôle et des moyens de génération (14, 114, 214) d'un champ magnétique adaptable autour de la chambre (110, 202), ledit capteur étant relié à l'organe de contrôle, lui-même relié aux moyens de génération (14, 114, 214) d'un champ magnétique, l'ensemble étant tel que la viscosité apparente du fluide magnéto-rhéologique varie au cours du déplacement de ladite touche.

2. Instrument de musique selon la revendication 1, dans lequel l'organe de contrôle ests apte à recevoir en temps réel des mesures provenant du au moins un capteur, et à calculer le courant à appliquer aux moyens de génération du champ magnétique en fonction du temps, à partir d'une part d'un modèle dynamique de l'instrument à simuler, et d'autre part des mesures en temps réel provenant dudit capteur.

3. Instrument de musique selon la revendication 1 ou 2, dans lequel le capteur est choisi parmi un capteur d'effort appliqué sur ou par ladite touche, un capteur de mouvement de l'organe de commande manuelle ou de l'élément mobile.

4. Instrument de musique selon la revendication 1, dans lequel l'élément mobile (112, 228) comporte plusieurs lames associées en deux groupes dits peignes, l'un étant mobile par rapport à l'autre, de manière à augmenter la surface de fluide cisaillé.

5. Instrument de musique selon revendication 1 ou 4, dans lequel l'élément mobile (112, 228) est en matériau amagnétique tel que le laiton, le cuivre ou le mica.

6. Instrument de musique selon la revendication 1 ou 4, dans lequel l'élément mobile (112, 228) est en matériau magnétique tel que fer ou acier, et comporte des moyens de guidage en matériau amagnétique.

7. Instrument de musique selon l'une des revendications 1 à 6, dans lequel l'élément mobile (112, 228) est flexible.

8. Instrument de musique selon l'une quelconque des revendications 1 à 7, dans lequel la chambre (110) comporte une poche souple contenant du fluide magnéto-rhéologique, ladite poche (110) étant prise en sandwich entre un pôle (114.2) des moyens de génération de champ magnétique (114) et la lame (112), ladite lame (112) étant en contact sensiblement plan avec une enveloppe extérieure de la poche (110).

9. Instrument de musique selon l'une quelconque des revendications 1 à 7, dans lequel la cambre (110) comporte plusieurs poches souples contenant du fluide magnéto-rhéologique, lesdites poches (110) étant prises en sandwich entre un pôle (114.2) des moyens de génération de champ magnétique (114) et la lame (112), ladite lame (112) étant en contact sensiblement plan avec des enveloppes extérieures des poches (110).

10. Instrument de musique selon l'une quelconque des revendications 1 à 9, dans lequel la lame (228) pénètre dans le fluide magnéto-rhéologique.

11. Instrument de musique selon la revendication précédente, comportant un support de lame (224) de résistance au flambage supérieure à celle de la lame (228), apte à relier la lame (228) à l'organe' de commande manuelle.

12. Instrument de musique selon la revendication précédente, dans lequel le support de lame (224) comporte une tige en deux parties (224.1, 224.2), une première partie (224.1) disposée dans la chambre (202) et une deuxième partie (224.2) disposée à l'extérieur de la chambre (202), une membrane flexible (220), fermant de manière étanche une extrémité de la chambre (202), étant pincée entre les deux parties (224.1, 224.2) de la tige.

13. Instrument de musique selon l'une quelconque des revendications précédentes, comportant des moyes de rappel en position repos de l'organe de commande manuelle.

14. Instrument de musique selon l'une quelconque des revendications précédentes, dans lequel les moyens de génération d'un champ magnétique variable (14, 114, 214) comportent au moins une bobine et un noyau de part et d'autre de la chambre.

15. Instrument de musique selon l'une quelconque des revendications précédentes, dans lequel les moyens de génération d'un champ magnétique variable (14, 114, 214) comportent au moins une bobine.

16. Instrument de musique selon la revendication 14 ou 15 en combinaison avec l'une des revendications 10 à 13, dans lequel la chambre (202) est délimitée latéralement directement par les moyens de génération de champ magnétique (214) et des plaques ou des coques (204), le fluide magnéto-rhéologique venant en contact directement avec les moyens de génération de champ magnétique (214), et dans lequel la chambre (202) est délimitée longitudinalement à une première extrémité par une membrane flexible (220), et munie à une seconde extrémité d'un bouchon, d'une membrane flexible ou d'une ouverture.

17. Instrument de musique selon la revendication 14 ou 15 en combinaison avec l'une des revendications 10 à 13, dans lequel la chambre (202) est délimitée latéralement directement et par un élément (300) d'un seul tenant comportant des lumières latérales et obturées par les moyens de génération de champ magnétique (214), le fluide magnéto-rhéologique venant en contact directement avec les moyens de génération de champ magnétique (214), et dans lequel la chambre (202) est délimitée longitudinalement à une première extrémité par une membrane flexible (220), et munie à une seconde extrémité d'un bouchon, d'une membrane flexible ou d'une ouverture.

## Claims

1. A chromatic keyboard musical instrument equipped with twelve keys per octave, of the piano type with at least one tactile or haptic sensory simulation device associated with at least one (500) of the said keys, where the said device is intended to oppose the movement of the said key (500) with a reaction reflecting the operation of the control, where the said device has a chamber (110, 202) containing a magnetc-rheoiogical fluid, at least one mobile element (112, 228) designed to shear the magneto-rheological fluid and intended to be linked mechanically to the said key (500), where the said element has at least one blade designed to shear the magneto-rheological fluid, with the said element (112, 228) being mobile between two predetermined positions, at least one sensor with a high cinematic or dynamic range that is representative of the movement of this element or of the control component, and a control component and means for the generation (14, 114, 214) of a suitable magnetic field around the chamber (110, 202), with the said sensor being linked to the control component, which itself is linked to the means for the generation (14, 114, 214) of a magnetic field, the whole being such that the apparent viscosity of the magneto-rheological fluid varied during movement of the said key.

2. A musical instrument according to claim 1, wherein the control component is designed to receive, in real time, measurements coming from at least one sensor, and to calculate the current to be applied to the means for generating the magnetic field as a function of time, firstly from a dynamic model of the instrument to be simulated, and secondly from the real-time measurements coming from the said sensor.

3. A musical instrument according to claim 1 or 2, wherein the sensor is chosen between a force sensor applied to or by the said key, and a sensor of movement of the manual control component or of the mobile element.

4. A musical instrument according to claim 1, wherein the mobile element (112, 228) comprises several blades combined into two groups called combs, one being mobile in relation to the other, so as to increase the area of fluid subjected to shear.

5. A musical instrument according to claim 1 or 4, wherein the mobile element (112, 228) is made from a nonmagnetic material such as brass, cropper or mica.

6. A musical instrument according to claim 1 or 4. wherein the mobile element (112, 228) is made from a magnetic material such as iron or steel, and comprises guidance means made from a nonmagnetic material.

7. A musical instrument according to one of claims 1 to 6, wherein the mobile element (112, 228) is flexible.

8. A musical Instrument according to any one of claims 1 to 7, wherein the chamber (110) comprises a flexible liner containing a magneto-rheological fluid, with the said liner (110) being sandwiched between a pole (114.2) of the means for generating the magnetic field (114) and the blade (112), where the said blade (112) is in more-or-less flat contact with an outer envelope of the liner (110).

9. A musical instrument according to any one of claims 1 to 7, wherein the chamber (110) comprises several flexible liners containing a magneto-rheological fluid, the said liners (110) being sandwiched between a pole (114.2) of the means for generating the magnetic field (114) and the blade (112), where the said blade (112) is in more-or-less flat contact with the outer envelopes of the liners (110).

10. A musical instrument according to any of claims 1 to 9, wherein the blade (228) penetrates into the magneto-rheological fluid.

11. A musical instrument according to the previous claim, where a blade support (224) has a resistance to buckling that is greater than that of the blade (228), designed to connect the blade (228) to the manual control component.

12. A musical instrument according to the previous claim, wherein the blade support (224) comprises a rod in two parts (224.1, 224.2), namely a first part (224.1) positioned in the chamber (202) and a second part (224.2) positioned outside the chamber (202), with a flexible membrane (220), closing off one end of the chamber in a sealed manner (202), being pinched between the two parts (224.1, 224.2) of the rod.

13. A musical instrument according to any one of the previous claims, with means for returning the manual control component to the rest position.

14. A musical instrument according to any one of the previous claims, wherein the means for generating a variable magnetic field (14, 114, 214) comprise at least one solenoid and a core on either side of the chamber.

15. A musical instrument according to any one of the previous claims, wherein the means for generating a variable magnetic field (14, 114, 214) comprise at least one solenoid.

16. A musical instrument according to claim 14 or 15 in combination with one of claims 10 to 13, wherein the chamber (202) is bordered laterally and directly by the means for generating the magnetic field (214), and by plates or shells (204), where the magneto-rheological fluid comes into direct contact with the means for generating a magnetic field (214), and wherein the chamber (202) is bordered longitudinally at a first end by a flexible membrane (220) and equipped at a second end with a cap, a flexible membrane or an opening.

17. A musical instrument according to claim 14 or 15 in combination with one of claims 10 to 13, wherein the chamber (202) is bordered laterally and directly by an element (300) added as a single part, with lateral openings and closed off by the means for generating the magnetic field (214), where the magneto-rheological fluid comes into direct contact with the means for generating the magnetic field (214), and wherein the chamber (202) is bordered longitudinally at a first end by a flexible membrane (220), and equipped at a second end with a cap, a flexible membrane or an opening.

## Patentansprüche

1. Chromatisches Musikinstrument mit einer zwölf Tasten pro Oktave aufweisenden Klaviatur des Pianotyps mit wenigstens einer Simulationsvorrichtung taktiler oder haptischer Empfindungen, verbunden mit wenigstens einer (500) der genannten Tasten, wobei die genannte Vorrichtung dazu bestimmt ist, sich vor der genannten Taste (500) einer den Ablauf der Betätigung reflektierenden Reaktion zu widersetzen, wobei die genannte Vorrichtung eine eine magneto-rheologische Flüssigkeit enthaltende Kammer (110, 202) umfasst, mit wenigstens einem beweglichen Element (112, 228), fähig die magneto-rheologische Flüssigkeit zu durchschneiden und dazu bestimmt, mit der genannten Taste (500) mechanisch verbunden zu sein, wobei das genannte Element (112, 228) umfasst: wenigstens eine zum Durchschneiden der magneto-rheologischen Flüssigkeit fähige Klinge, beweglich zwischen zwei vorherbestimmten Stellungen, wenigstens einen Sensor einer kinematischen und/oder dynamischen Größe, repräsentativ für die Bewegung dieses Elements oder des Betätigungsorgans, und ein Betätigungsorgan und Einrichtungen (14, 114, 214) eines anpassbaren magnetischen Feldes um die Kammer (110, 202) herum, wobei der genannte Sensor mit dem Betätigungsorgan verbunden ist, das seinerseits mit den Magnetfelderzeugungseinrichtungen (14, 114, 214) verbunden ist und das Ganze so ist, dass die effektive Viskosität der magneto-rheologischen Flüssigkeit im Laufe der Bewegung der genannten Taste variiert.

2. Musikinstrument nach Anspruch 1, bei dem das Betätigungsorgan fähig ist, in Echtzeit Messwerte von wenigstens einem Sensor zu empfangen und den auf die Magnetfelderzeugungseinrichtungen anzuwendenden Strom als Funktion der Zeit zu berechnen aufgrund einerseits eines dynamischen Modells des zu simulierenden Instruments und andererseits der von dem genannten Sensor stammenden Echtzeitmessungen.

3. Musikinstrument nach Anspruch 1 oder 2, bei dem der Sensor ausgewählt wird zwischen einem Sensor der auf die Taste einwirkenden oder von ihr ausgehenden Kraft, einen Sensor der Bewegung des Handbetätigungsorgans oder des beweglichen Elements.

4. Musikinstrument nach Anspruch 1, bei dem das bewegliche Element (112, 228) mehrere in zwei - Kämme genannte - Gruppen zusammengefasste Klingen umfasst, wovon die eine beweglich ist in Bezug auf die andere, um die durchschnittene Flüssigkeitsfläche zu vergrößern.

5. Musikinstrument nach Anspruch 1 oder 4, bei dem das bewegliche Element (112, 228) aus einem unmagnetischen Material wie Messing, Kupfer oder Glimmer ist.

6. Musikinstrument nach Anspruch 1 oder 4, bei dem das bewegliche Element (112, 228) aus einem magnetischen Material wie Eisen oder Stahl ist und Führungseinrichtungen aus unmagnetischem Material umfasst.

7. Musikinstrument nach einem der Ansprüche 1 bis 6, bei dem das bewegliche Element (112, 228) flexibel ist.

8. Musikinstrument nach einem der Ansprüche 1 bis 7, bei dem die Kammer (110) eine nachgiebige, magneto-rheologische Flüssigkeit enthaltende Tasche umfasst, wobei die genannte Tasche (110) sandwichartig enthalten ist zwischen einem Pol (114.2) der Magnetfelderzeugungseinrichtungen (114) und der Klinge (112), wobei die genannte Klinge (112) einen im Wesentlichen ebenen Kontakt mit einer Außenhülle der Tasche (110) hat.

9. Musikinstrument nach einem der Ansprüche 1 bis 7, bei dem die Kammer (110) mehrere nachgiebige, magneto-rheologische Flüssigkeit enthaltende Taschen umfasst, wobei die genannten Taschen (110) sandwichartig enthalten sind zwischen einem Pol (114.2) der Magnetfelderzeugungseinrichtungen (114) und der Klinge (112), wobei die genannte Klinge (112) einen im Wesentlichen ebenen Kontakt mit Außenhüllen der Taschen (110) hat.

10. Musikinstrument nach einem der Ansprüche 1 bis 9, bei dem die Klinge (228) in die magneto-rheologische Flüssigkeit eindringt.

11. Musikinstrument nach dem vorhergehenden Anspruch, einen Klingenhalter (224) mit einem höheren Knickwiderstand als dem der Klinge (228) umfassend, fähig die Klinge (228) mit dem Handbetätigungsorgan zu verbinden.

12. Musikinstrument nach dem vorhergehenden Anspruch, bei dem der Klingenhalter (224) eine zweiteilige Stange (224.1, 224.2) umfasst, von der sich ein erster Teil (224.1) in der Kammer (202) und ein zweiter Teil (224.2) außerhalb der Kammer (202) befindet, wobei eine zwischen den beiden Teilen (224.1, 224.2) der Stange eingeklemmte flexible Membran (220) ein Ende der Kammer (202) dicht verschließt.

13. Musikinstrument nach einem der vorhergehenden Ansprüche mit Ruhestellungs-Rückstelleinrichtungen des Handbetätigungsorgans.

14. Musikinstrument nach einem der vorhergehenden Ansprüche, bei dem die Einrichtungen zur Erzeugung eines variablen Magnetfelds (14, 114, 214) auf beiden Seiten der Kammer wenigstens eine Spule und einen Kern umfassen.

15. Musikinstrument nach einem der vorhergehenden Ansprüche, bei dem die Einrichtungen zur Erzeugung eines variablen Magnetfelds (14, 114, 214) auf beiden Seiten der Kammer wenigstens eine Spule umfassen.

16. Musikinstrumente nach Anspruch 14 oder 15 kombiniert mit einem der Ansprüche 10 bis 13, bei dem die Kammer (202) seitlich direkt begrenzt ist durch die Magnetfelderzeugungseinrichtungen (214) und Platten oder Schalen (204), wobei die magneto-rheologische Flüssigkeit direkten Kontakt mit Magnetfelderzeugungseinrichtungen (214) hat und bei dem die Kammer (202) in Längsrichtung an einem ersten Ende durch eine flexible Membran (220) begrenzt ist und an einem zweiten Ende einen Deckel, eine flexible Membran oder eine Öffnung aufweist.

17. Musikinstrument nach Anspruch 14 oder 15 kombiniert mit einem der Ansprüche 10 bis 13, bei dem die Kammer (202) seitlich direkt und durch ein Element (3i70) aus einem Stück begrenzt ist, das seitliche Öffnungen umfasst, verschlossen durch die Magnetfelderzeugungseinrichtungen (214), so dass die magneto-rheologische Flüssigkeit direkten Kontakt mit den Magnetfelderzeugungseinrichtungen hat und bei dem die Kammer (202) in Längsrichtung an einem ersten Ende durch eine flexible Membran (220) begrenzt ist und an einem zweiten Ende einen Deckel, eine flexible Membran oder eine Öffnung aufweist.
